# DEMANDE DE BREVET EUROPEEN

(11) **EP 0 527 677 A1**
(43) Date de publication de la demande: **17.02.1993**
(21) Numéro de dépôt: 92402248.6
(22) Date de dépôt: 07.08.1992
(51) Int. Cl.: A22C 21/00, A22C 17/00

(54) **Machine pour le traitement de la chair des ailes de volaille**

(30) Priorité: 09.08.1991 FR 9110171
(71) Demandeur: SARL CHARLES VICTOR Société à Responsabilité Limitée, F-37800 Sepmes (FR)
(72) Inventeur: Cresson, Christian, F-37800 Sepmes (FR); Levy, Amnon, Kiriat Tivon 36000 (IL)
(74) Mandataire: Boutin, Antoine

(57) **Abrégé**

Machine permettant de retrousser de la chair et ou de la peau sur un os ou un moignon d'os.

Elle comporte en alignement axial un dispositif de poussée (11), une monture de maintien (9) et des mâchoires mobiles formant un cône (44).

Application à la préparation industrielle d'ailes de volaille prêtes à cuire.

## Description

L'invention concerne une machine pour le traitement de la chair des ailes de volaille, et plus spécialement, bien qu'il ne s'agisse pas là d'une limitation de l'invention, celle des ailes de poulet.

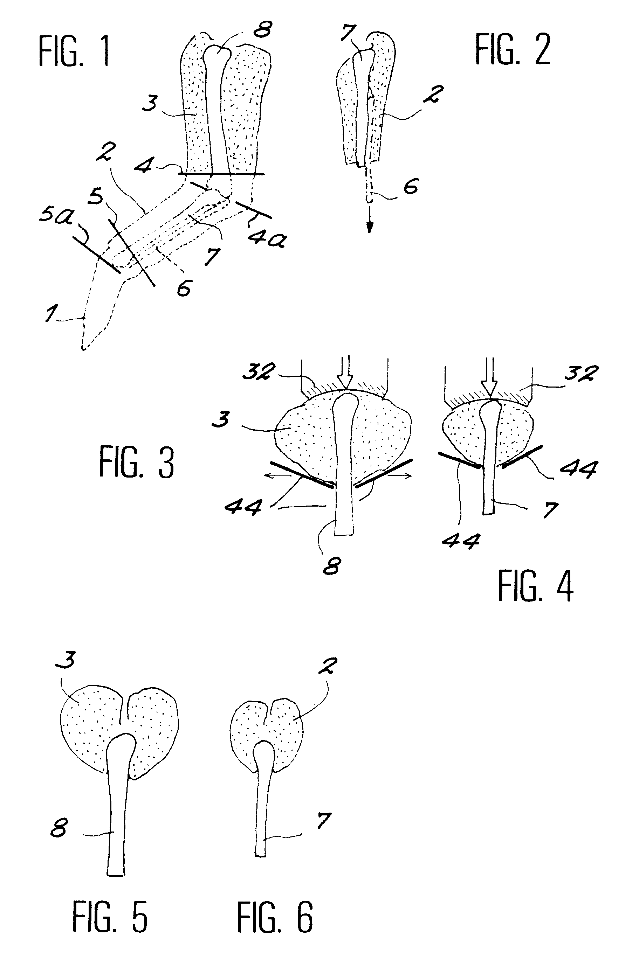

Il est connu, notamment dans la cuisine asiatique, de confectionner des sortes de sucettes à partir de l'aile et de l'aileron des poulets dont la chair a été retroussée au-dessus de l'os tout en y restant partiellement attachée, l'os formant un bâtonnet de préhension pour la chair conformée en une sorte de boule passée à la friture. La préparation de ces sucettes de poulet est exclusivement manuelle et consiste, après avoir découpé l'aile 2 et l'aileron 3 le long des lignes 4 et 5 représentées sur la figure 1, puis après avoir jeté le fouet 1, à retirer le radius de l'aileron, à retrousser la peau et la chair vers le haut de l'os restant, toutes ces opérations étant faites manuellement.

Les ailes et ailerons de poulet sont des éléments de l'animal qui ont actuellement une très faible valeur commerciale dans le traitement industriel de la volaille, car ils comportent une très grande proportion de peau, de cartilages, d'os, mais très peu de chair et n'ont jusqu'à présent été considérés que comme des sous-produits dévalorisés principalement réservés à la nourriture animale.

Il est souhaitable de parvenir à automatiser les opérations de préparation de telles sucettes de poulet à partir des ailes et des ailerons de manière à revaloriser ces parties de la volaille et en faire un plat prêt à cuire commercialisable.

Il est plus particulièrement souhaitable de parvenir à automatiser le processus de retroussage de la peau et de la chair le long du ou des os de l'aile et de l'aileron après leur découpe, car c'est le manque d'une telle automatisation qui a empêché jusqu'à présent la valorisation industrielle de cette partie de l'animal.

C'est pourquoi la présente invention a pour but de procurer une machine pour le retroussage automatique de la peau et de la chair d'ailes et d'ailerons de volailles prédécoupés, et plus spécialement de poulets.

A cet effet, la machine selon l'invention comporte en alignement :
- un dispositif de poussée dont la tête est destinée à venir en appui sur la partie supérieure de l'aile ou de l'aileron prédécoupé,
- une monture de maintien coaxiale au dispositif de poussée, maintenant individuellement chaque aile ou aileron en alignement entre le dispositif de poussée et un dispositif de mâchoires,
- les mâchoires dudit dispositif de mâchoires étant mobiles en translation à l'encontre de ressorts et formant un cône en gradins à travers lequel l'aile ou l'aileron est poussé par le dispositif de poussée.

Cette action de poussée à travers des mâchoires en gradins mobiles en translation a pour effet de réaliser le retroussement autour du cotyle de la peau et de la chair restés attachés à l'os, formant ainsi une boule comestible, les dites mâchoires s'écartant progressivement à l'encontre de leurs ressorts au fur et à mesure de la formation de la boule et revenant automatiquement en position serrée après le passage de cette boule, la rétraction du moyen de poussée assurant la libération de la sucette.

De préférence, le dispositif de poussée, la monture de maintien et les mâchoires mobiles sont montés en alignement coaxial vertical, mais un alignement coaxial horizontal peut être envisagé sans sortir du cadre de l'invention.

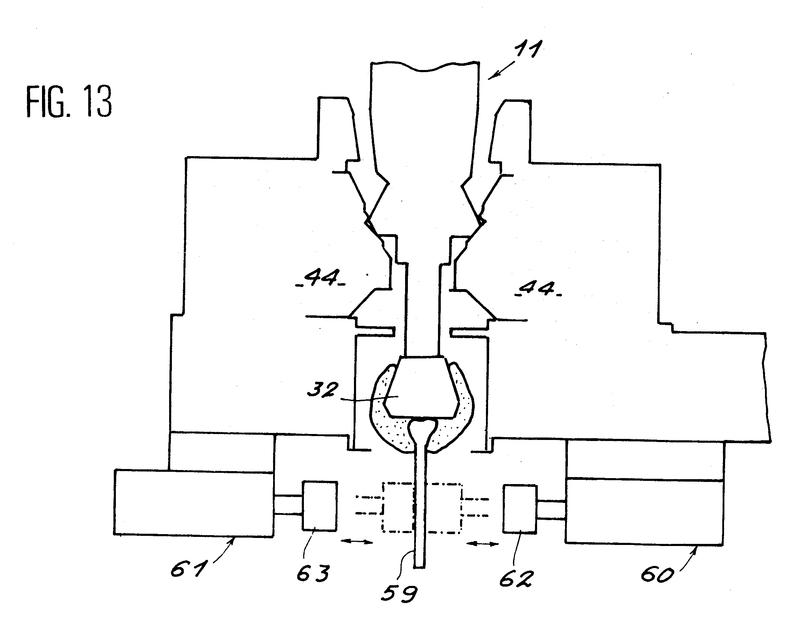

Selon un mode de réalisation préféré, le dispositif de poussée est constitué par un vérin télescopique à deux éléments, la tête du premier élément étant destinée à venir en fin de course en butée au niveau du bas du cône constitué par les mâchoires tandis que la tête du second élément porte contre le cotyle de l'aile ou de l'aileron à traiter, l'arrivée en butée dudit premier élément libérant un verrou permettant au dit second élément de traverser le cône pour achever le retroussement de la chair et de la peau autour du cotyle puis la sucette est maintenue au niveau de l'os par un dispositif de serrage commandé par vérin (Fig. 13). Lorsque le dispositif de poussée est de retour en position initiale, le dispositif de serrage libère la sucette.

Selon un autre mode de réalisation avantageux, la monture de maintien est constituée par un manchon tubulaire dont les deux extrémités sont fermées par une membrane déformable percée en son milieu d'un trou. Ceci permet de mettre en position correcte très aisément les pièces à traiter tout en assurant leur parfait alignement dans l'appareil. En outre, l'utilisation de ces membranes souples évite d'avoir recours à des dispositifs mécaniques complexes pour maintenir les pièces traitées tout en permettant leur coulissement sous l'action du dispositif de poussée. Enfin le passage des ailes ou ailerons à travers les membranes de la monture de maintien procure un début de retroussage de la peau et de la chair.

De préférence la monture de maintien est munie d'une membrane intermédiaire supplémentaire pour favoriser cette action de retroussage et le guidage des pièces traitées.

De préférence également, une pluralité de montures identiques est montée à la périphérie d'un plateau tournant disposé entre le dispositif de poussée et le dispositif de mâchoires mobiles. Ainsi, grâce à un asservissement approprié, chaque course retour du mécanisme de poussée provoque la rotation du disque et la présentation automatique d'une nouvelle pièce à traiter.

D'autres caractéristiques et avantages de l'invention ressortiront de la description ci-après d'un exemple de réalisation d'une machine à retrousser les ailes et ailerons de volaille prédécoupés en réference aux dessins annexés dans lesquels sont représentés schématiquement :
- sur la Figure 1 : une vue partielle en coupe d'une aile de poulet avant découpe,
- sur la Figure 2 : une vue en coupe d'un aileron de poulet prédécoupé,
- sur la Figure 3 : une vue en coupe d'une aile de poulet prise entre la tête du dispositif de poussée et les mâchoires mobiles,
- sur la Figure 4 : une vue en coupe d'un aileron de poulet pris entre la tête du dispositif de poussée et les mâchoires mobiles,
- sur la figure 5 : une vue en coupe d'une sucette de poulet fabriquée dans la machine selon l'invention à partir d'une aile,
- sur la Figure 6 : une vue en coupe d'une sucette de poulet fabriquée dans la machine selon l'invention à partir d'un aileron,
- sur la Figure 7 : une vue en coupe verticale d'une machine selon l'invention,
- sur la Figure 8 : une vue partielle en coupe agrandie du verrou du vérin télescopique de la machine de la Figure 7,
- sur la Figure 9 : une vue de dessus de la machine de la figure 7,
- sur la Figure 10 : une vue en coupe verticale agrandie du dispositif de mâchoires mobiles de la machine de la Figure 7,
- sur la Figure 11 : une vue en coupe illustrant le passage d'une aile de poulet dans la monture à membranes souple et dans les mâchoires mobiles,
- sur les Figures 12A et 12B : deux vues schématiques de dessus d'un mode de réalisation préféré de mâchoires selon l'invention,
- et sur la Figure 13 : une vue en coupe verticale d'un mode de réalisation préféré du dispositif selon l'invention.

Comme indiqué précédemment, on voit sur la figure 1 qu'une aile de poulet comporte un fouet 1, un aileron 2 et une aile 3. Pour la préparation de sucettes de poulet prêtes à cuire, on découpe l'aile 3 et l'aileron 2 le long des lignes de coupe respectives 4 et 5 ou 4bis et 5bis légèrement au-dessus des cotyles inférieurs des os ou le long des lignes de coupe 4a et 5a correspondant aux articulations de l'aile. Le fouet 1 constitue un déchet éventuellement utilisable pour l'alimentation animale.

Lors de cette opération de découpe, la chair et la peau ont naturellement tendance à se rétracter en direction du sommet de l'os auquel elles sont encore attachées pas les tendons et les cartilages. Cela dégage l'extrémité libre des os 6 et 7 de l'aileron et 8 de l'aile. On ôte alors le radius 6 de l'aileron tout simplement en tirant dessus comme cela est représenté schématiquement sur la figure 2.

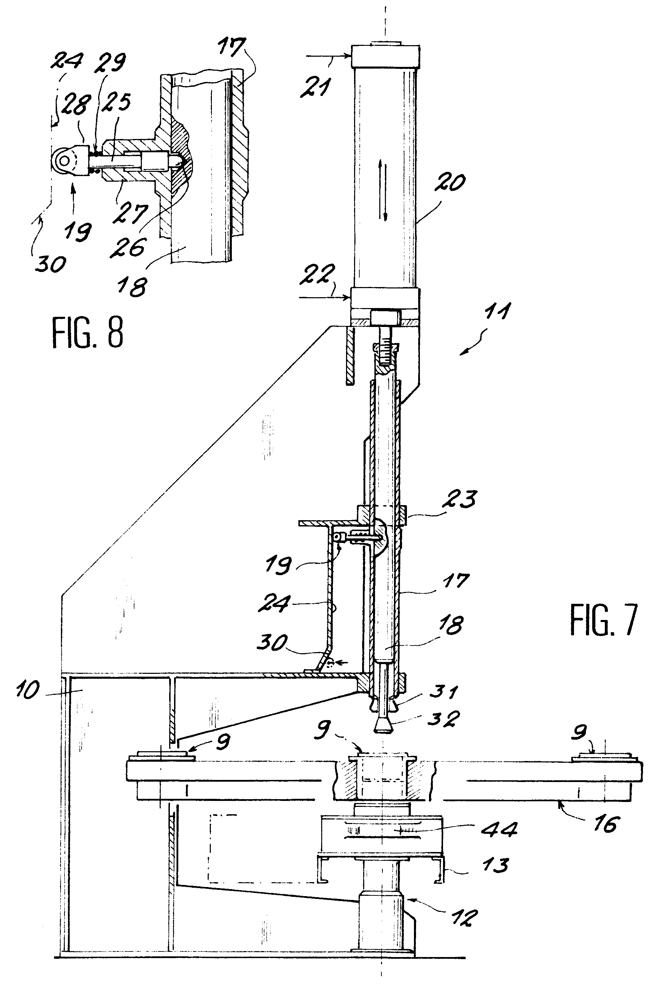

Les morceaux d'aile et d'aileron ainsi préparés sont enfichés individuellement, l'extrémité libre de l'os faisant saillie vers le bas, dans les montures 9 à membranes de l'appareil qui va maintenant être décrit plus en détail en relation avec les figures 7 à 11.

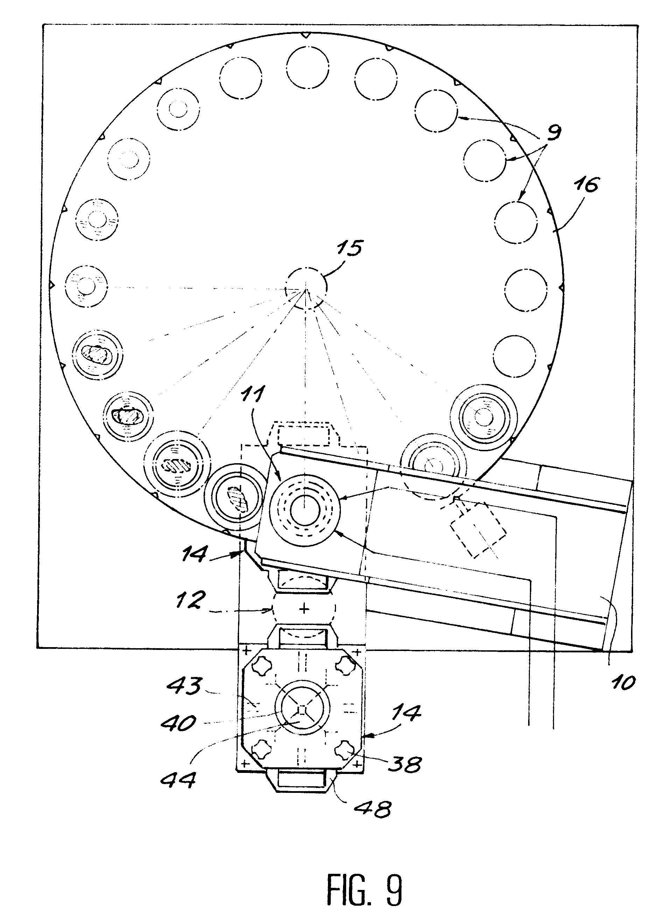

L'appareil comporte un bâti 10 supportant en partie haute un vérin télescopique 11 à deux éléments, en partie basse un pylône 12 supportant une table 13 sur laquelle une cassette 14 peut coulisser pour prendre deux positions : une position active dans laquelle elle se trouve en alignement axial sous le vérin 11 et une position inactive dans laquelle elle est dégagée du reste de la machine. Le bâti de la machine porte en outre un second pylône 15, représenté en traits pointillés sur la figure 9, sur lequel est monté à rotation un plateau circulaire 16 à la périphérie duquel sont placées les montures de maintien 9. L'écartement entre le centre du plateau 16 et l'axe d'alignement vertical du vérin 11 et de la cassette 14 en position de service est tel que lors de la rotation du plateau les montures 9 viennent successivement se placer dans cet axe d'alignement. Un asservissement, qui ne sera pas décrit plus en détail, assure que la rotation pas à pas du plateau 16 soit synchronisée avec les mouvements du vérin 11.

Comme on le voit plus particulièrement sur les figures 7 et 8, le vérin 11 comporte deux éléments télescopiques 17,18 solidarisés par un verrou 19. Sur la figure 7, la référence 20 représente le cylindre du vérin 11 et les références 21, 22 ses lignes d'alimentation. Les éléments télescopiques 17, 18 sont montés dans un collier 23 porté par le châssis 10. A ce collier 23 est fixée une plaque de guidage 24 pour le verrou 19. Ce verrou est constitué par une tige 25 dont une extrémité coopère avec un évidement 26 pratiqué dans le deuxième élément 18, la tige 25 étant guidée dans un fourreau 27 solidaire du premier élément 17. L'autre extrémité de la tige 25 porte un galet 28 maintenu en appui sur la plaque de guidage 24 par un ressort 29. En partie basse 30 la plaque de guidage 24 est déviée pour permettre au verrou de se désengager de l'évidement 26, lors de la fin de la course de descente du premier élément 17, ce qui provoque la descente du second élément 18.

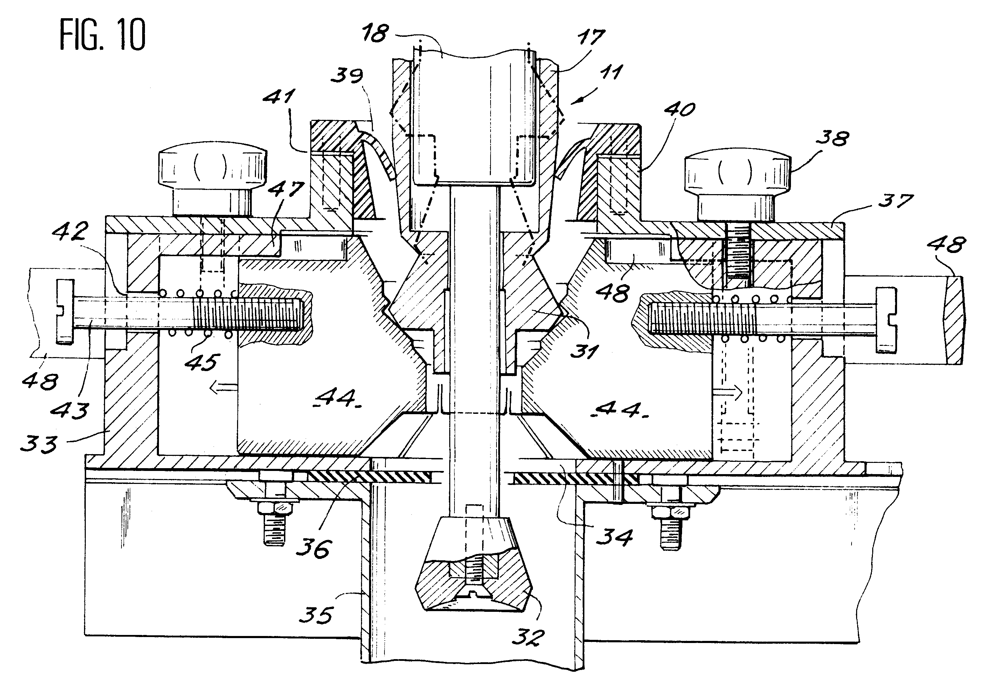

L'extrémité basse 31 du premier élément est de forme générale sensiblement tronconique avec un chanfrein à sa base afin de coopérer, comme on le voit mieux sur la figure 10, avec les gradins du cône formé par les mâchoires du dispositif de mâchoires qui sera décrit plus en détail par la suite. L'extrémité basse 32 du second élément 18 a également une forme générale tronconique avec un chanfrein à sa base mais de dimensions plus faibles. C'est cette extrémité 32 qui prendra appui sur le cotyle supérieur de la pièce de volaille à traiter aile 3 ou aileron 2 lors du mouvement de descente du vérin : le chanfrein de sa base est destiné à guider la peau et la chair au début du mouvement de retroussage, tandis que la pente tronconique a pour but de faciliter l'expulsion de la boule de chair lors du mouvement de rétraction du vérin. De préférence, l'extrémité basse 32 de l'élément 18 sera en un matériau à faible coefficient de friction ou sera recouverte d'un tel matériau. Elle pourra en outre être montée de manière amovible sur l'élément 18 de manière à pouvoir être facilement remplacée.

La cassette 14 comporte le dispositif de mâchoires mobiles qui en combinaison avec les montures de maintien 9 et le vérin 11 assure l'opération de retroussage.

Cette cassette 14 est constituée par un boîtier 33 dont le fond est percé d'une ouverture 34 correspondant à celle d'une goulotte d'évacuation 35 fixée sur le bâti 10, et par laquelle les pièces traitées tombent dans un récipient approprié disposé sous le bâti mais non représenté sur les dessins. Entre le fond du boîtier 33 et la goulotte 35 est placée une membrane déformable 36 percée en son centre d'une ouverture de plus faible diamètre que l'ouverture 34 et qui a pour double fonction de parachever la formation de la boule lors du mouvement de descente du vérin 11 et d'aider à son expulsion lors du mouvement de rétraction du vérin.

Le boîtier est fermé à sa partie supérieure par un couvercle amovible 37 fixé par des poignées vissantes 38. En variante, ces poignées vissantes peuvent être remplacées par tout dispositif connu d'attaches rapides. Le couvercle 37 comporte également une ouverture centrale 39 coaxiale à l'ouverture 34 et bordée par une collerette 40 sur laquelle vient se fixer une membrane déformable d'étanchéité 41 percée en son centre et assurant un guidage de la pièce traitée en avant des mâchoires 44. Cette membrane est fixée sur la collerette 40 par une couronne 41′.

Les bords latéraux du boîtier 33 comportent des alésages 42 pour le passage de tiges de guidage 43 vissées dans la face arrière des mâchoires 44 disposées à l'intérieur du boîtier 33. Un ressort 45 entourant chaque tige 43 est interposé entre le bord du boîtier 33 et la face arrière de la mâchoire 44 correspondante. Sous le couvercle 37 sont disposées des nervures 46 destinées guider le mouvement de translation des mâchoires 44 et à limiter leur mouvement de retrait lors du passage des ailes ou ailerons poussés par le vérin 11. A cet effet, chaque mâchoire 44 comporte sur sa face supérieure une rainure 48. Quatre mâchoires 44 sont placées côte-à-côte à l'intérieur du boîtier 33. Leurs faces avant constitue un cône dont l'apex est dirigé vers le bas et dont on voit le profil en gradins sur la figure 10. Il a été constaté que ce profil en gradins procurait de bien meilleur résultat qu'un profil lisse. Sur deux de ses bords opposés le boîtier 33 est en outre muni de poignées de préhension 48 permettant une manutention aisée.

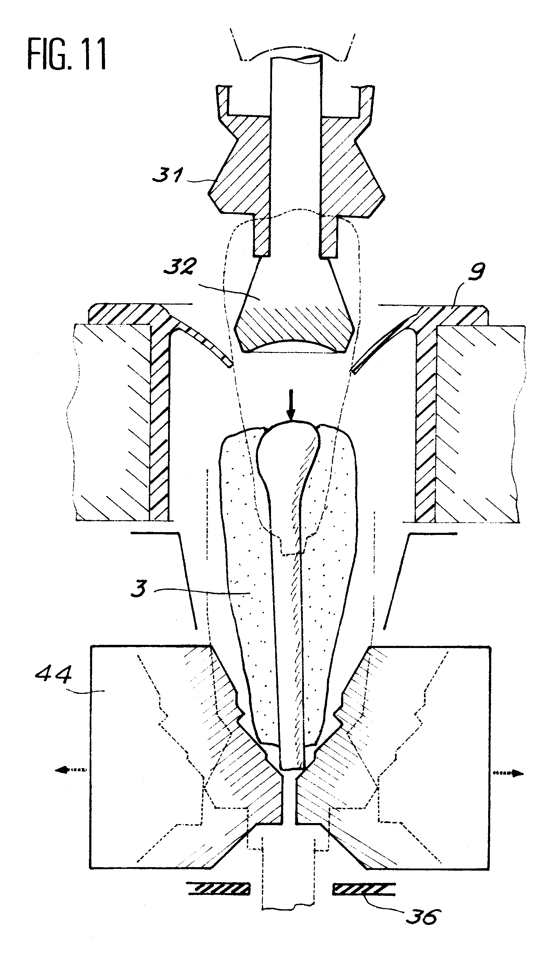

La figure 11 est un schéma de principe illustrant le fonctionnement de la machine Il montre en traits pleins la position de l'extrémité basse 32 de l'élément 18 du vérin 11 traversant la membrane supérieure d'une monture 9 lors de son mouvement de rétraction et en traits pointillés la position la plus basse de l'extrémité basse 31 de l'élément 17 du vérin 11 lors de sa fin de course vers le bas, les mâchoires 44 étant à leur écartement maximal. Pour plus de simplicité on a omis la membrane basse de !a monture 9 et les parties du boîtier 33 autres que les mâchoires 44.

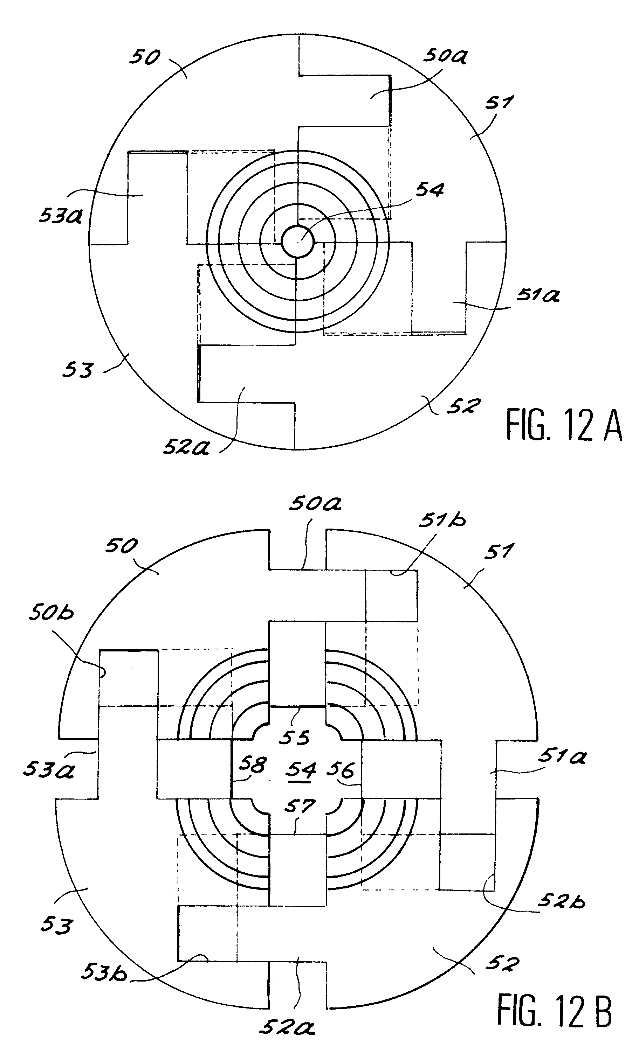

Sur les figures 12A et 12B, un mode préféré de réalisation de mâchoires selon l'invention comporte quatre mâchoires 50 à 53 coopérant pour former un cône.

Chaque mâchoire 50 à 53 comporte une pièce en relief 50a à 53a s'étendant au-delà du quart du secteur cylindrique circonscrit et une forme en creux correspondante 50b à 53b à celle de la pièce adjacente.

La coopération des pièces adjacentes produit un effet d'enchevêtrement des mâchoires 50 à 53 au cours de leurs déplacements successifs d'ouverture et de fermeture, de manière à ce que l'espace central 54 correspondant au passage de l'extrémité tronconique 32 soit limité de chaque côté par des parois 55 à 58 latérales des pièces en relief 50a à 53a. De cette manière, on évite toute introduction entre les mâchoires 50 à 53 de morceaux de viande ou d'os susceptible d'empêcher le bon fonctionnement des mâchoires en limitant leur ouverture ou leur fermeture.

Dans l'exemple représenté, les pièces en relief 50a à 53a sont conformées en prismes droits à base trapézoïdale, mais il est bien entendu que toute autre forme de pièce en relief apte à constituer des parois 55 à 58 ne sort pas du cadre de la présente invention.

Sur la figure 13, un dispositif supplémentaire de maintien de la sucette apte à retenir l'os 59 pendant la remontée du dispositif de poussée 11 comporte au moins un vérin 60 ou 61, et de préférence deux vérins se déplaçant en sens contraire l'un de l'autre pour appliquer au moins un tampon de serrage 62 ou 63 contre l'os 59.

De préférence les deux tampons 62, 63 viennent serrer l'os 59 de part et d'autre juste après l'arrêt du dispositif de poussée 11 en position basse et avant la remontée de ce dispositif de poussée 11.

Après la remontée du dispositif de poussée 11, les deux tampons 62, 63 reprennent la position représentée en traits pleins pour permettre la rotation du plateau 16 et le traitement de la monture 9 suivante.

L'invention n'est pas limitée à l'exemple de réalisation décrit ci-dessus. Elle englobe toute machine permettant de retrousser de la chair et ou de la peau, sur un os ou sur un moignon d'os et comportant en alignement axial un dispositif de poussée, une monture de maintien et des mâchoires mobiles formant un cône.

## Revendications

**1.-** Machine permettant de retrousser de la chair et ou de la peau sur un os ou un moignon d'os et caractérisée en ce qu'elle comporte en alignement axial un dispositif de poussée (11), une monture de maintien (9) et des mâchoires mobiles formant un cône (44).

**2.-** Machine selon la revendication 1 pour le retroussage automatique de la peau et de la chair d'ailes et d'ailerons de volailles prédécoupés, et plus spécialement de poulets caractérisée en ce qu'elle comporte en alignement :
- un dispositif de poussée (11) dont la tête (32) est destinée à venir en appui sur la partie supérieure (8,7) de l'aile (3) ou de l'aileron (2) prédécoupé,
- une monture (9) coaxiale au dispositif de poussée, maintenant individuellement chaque aile (3) ou aileron (2) en alignement entre le dispositif de poussée (11) et un dispositif de mâchoires (44), les mâchoires (44) dudit dispositif de mâchoires étant mobiles en translation à l'encontre de ressorts (45) et formant un cône en gradins à travers lequel l'aile (3) ou l'aileron (2) est poussé par le dispositif de poussée (11).

**3.-** Machine selon la revendication 1 ou 2 caractérisée en ce que le dispositif de poussée (11) , la monture de maintien (9) et les mâchoires mobiles (44) sont montés en alignement coaxial vertical.

**4.-** Machine selon l'une quelconque des revendications 1 à 3 caractérisée en ce que le dispositif de poussée (11) est constitué par un vérin télescopique à deux éléments (17, 18) , la tête (31) du premier élément (17) étant destinée à venir en fin de course en butée au niveau du bas du cône constitué par les mâchoires (44) tandis que la tête (32) du second élément (18) porte contre le cotyle (8, 7) de l'aile (3) ou de l'aileron (2) à traiter, l'arrivée en butée dudit premier élément libérant un verrou (19) permettant au dit second élément de traverser le cône pour achever le retroussement de la chair et de la peau autour du cotyle puis de libérer la sucette formée lors du mouvement de rétraction du vérin.

**5.-** Machine selon la revendication 4 caractérisée en ce que le verrou (19) est constitué par une tige (25) dont une extrémité coopère avec un évidement (26) pratiqué dans le deuxième élément (18), la tige (25) étant guidée dans un fourreau (27) solidaire du premier élément (17) ; en ce que l'autre extrémité de la tige (25) porte un galet (28) maintenu en appui sur une plaque de guidage (24), portée par le bâti de la machine, par un ressort (29), et en ce que en partie basse (30) la plaque de guidage (24) est déviée pour permettre au verrou de se désengager de l'évidement (26), lors de la fin de la course de descente du premier élément (17), ce qui provoque la descente du second élément (18).

**6.-** Machine selon l'une quelconque des revendications précédentes caractérisée en ce que la monture de maintien (9) est constituée par un manchon tubulaire dont les deux extrémités sont fermées par une membrane déformable percée en son milieu d'un trou.

**7.-** Machine selon la revendication 6 caractérisée en ce qu'elle comporte un plateau rotatif (16) à la périphérie duquel est disposée une pluralité de montures de maintien (9).

**8.-** Machine selon la revendication 6 ou 7 caractérisée en ce que la monture de maintien (9) comporte une membrane déformable supplémentaire disposée entre les deux membranes d'extrémité.

**9.-** Machine selon l'une quelconque des revendications précédentes caractérisée en ce qu'elle comporte quatre mâchoires (44) montées mobiles côte-à-côte dans un boîtier (33).

**10.-** machine selon la revendication 9 caractérisée en ce que chaque mâchoire est associée à une tige de guidage (43) traversant le boîtier (33) et entourée d'un ressort (45).

**11.-** Machine selon la revendication 10 caractérisée en ce que le boîtier comporte des nervures (47) coopérant avec des rainures (48) disposées dans la face supérieure des mâchoires.

**12.-** Machine selon l'une quelconque des revendications 9 à 11 caractérisée en ce que le boîtier est muni d'un couvercle amovible.
